# EUROPÄISCHE PATENTSCHRIFT

(11) **EP 0 991 159 B1**
(45) Veröffentlichungstag und Bekanntmachung des Hinweises auf die Patenterteilung: **09.02.2011**
(21) Anmeldenummer: 99119208.9
(22) Anmeldetag: 28.09.1999
(51) Int. Cl.: H02H 1/00

(54) **Vorrichtung zur Phasenfehler-Erkennung**
Apparatus for phase fault detection
Appareil de détection des défauts de phase

(30) Priorität: 30.09.1998 DE 19844881; 31.07.1999 DE 19936183; 17.09.1999 DE 19944680
(43) Veröffentlichungstag der Anmeldung: 05.04.2000
(73) Patentinhaber: Franz Vogl Electronic GmbH, 94330 Salching (DE)
(72) Erfinder: Vogl, Franz, 94315 Straubing (DE)
(74) Vertreter: Graf, Helmut

(56) Entgegenhaltungen:
- US-A- 4 331 995

## Beschreibung

Die Erfindung bezieht sich auf eine Vorrichtung zur Phasenfehler-Erkennung, insbesondere zur Erdschlußerfassung.

In elektrischen Energie-Anlagen, insbesondere auch in Leitungen oder Leitungsabschnitten zur Übertragung von elektrischer Energie sind Erdschlüsse in Form von Lichtbögen nicht auszuschließen, die zu erheblichen Schäden führen, falls diese innerhalb einer Schaltanlage nicht schnell abgeschaltet werden. Wichtig ist daher ein schnelles Erkennen von derartige Phasenfehlern und ein schnelles Abschalten der betreffenden Einrichtung bzw. des betreffenden Leitungsabschnittes. Dokument US-A-4331995 offenbart eine Vorrichtung gemäß dem Oberbegriff des Anspruchs 1.

Aufgabe der Erfindung ist es, eine Vorrichtung aufzuzeigen, die nicht nur ein schnelles und Sicheres Erkennen von Phasenfehlern ermöglicht, sondern auch bereits unmittelbar nach dem Auftreten eines ernsthaften Phasenfehlers (Erdschlusses) ein Signal (Fehlersignal) liefert, welches zum Abschalten oder Abtrennen der betreffenden Einrichtung bzw. des betreffenden Leitungsabschnittes vom Netz verwendet werden kann. Erfindungsgemäß wird dies durch Vorsehen der im kennzeichnenden Teil des Anspruchs 1 aufgeführten Merkmale erreicht.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung ein Block- bzw. Funktionsdiagramm einer Ausführungsform der erfindungsgemäßen Vorrichtung zur Phasenfehler- Erkennung bei einer Dreiphasen-Leitung zur Übertragung elektrischer Energie;
- Fig. 2: das Ausgangssignal einer Eingangs- oder Meßstufe bei normalem Betrieb;

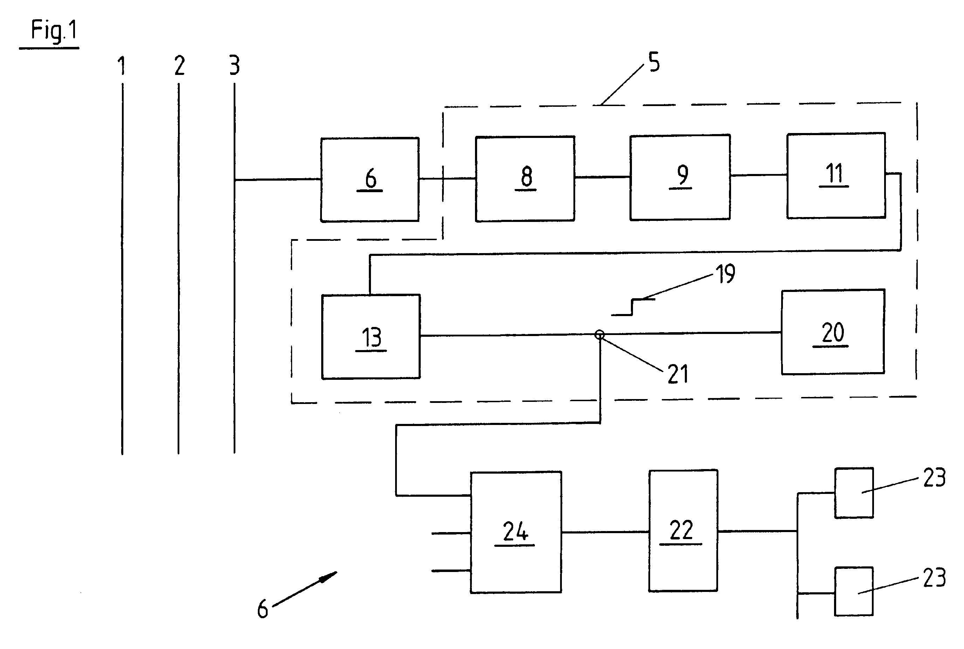

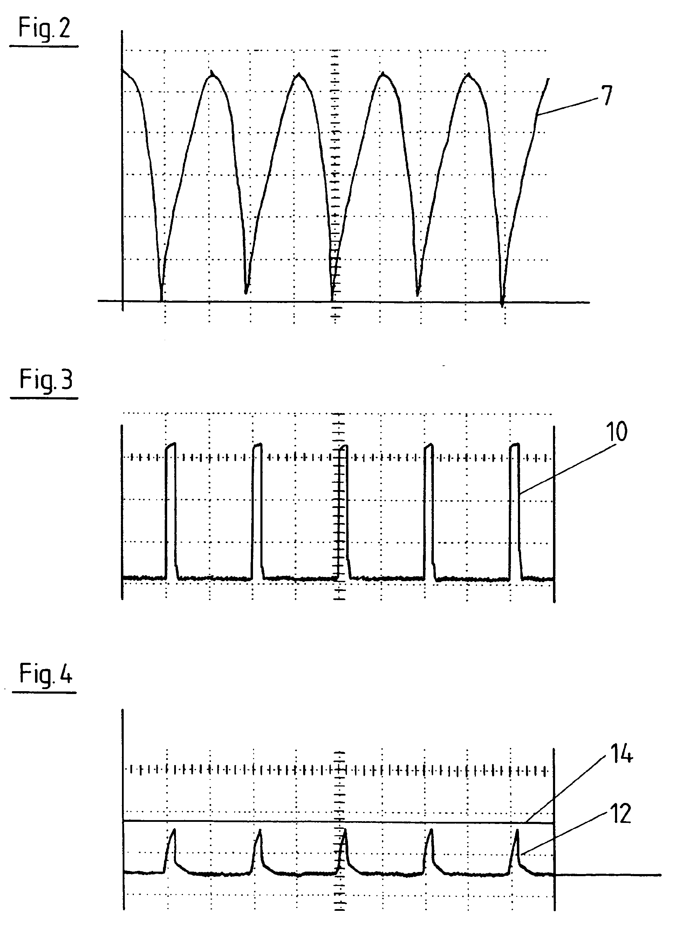

- Fig. 2 und 3: das Eingangs- und Ausgangssignal einer Integrierstufe der Vorrichtung der Figur 1 bei störungsfreiem Betrieb;

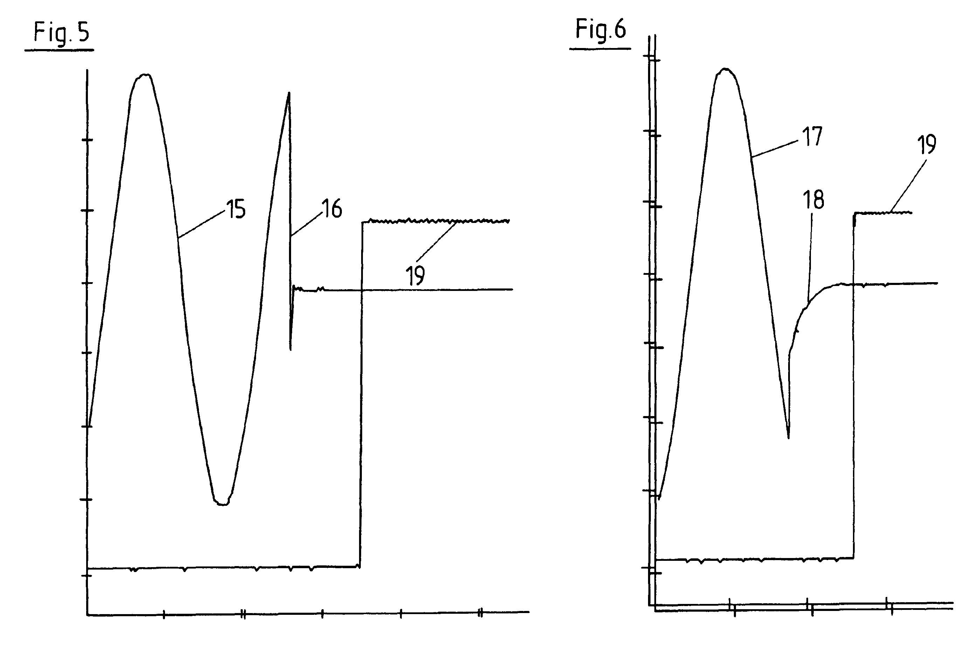

- Fig. 5: und 6 den Spannungsverlauf am Eingang der Eingangs- oder Meßstufe, und zwar bei einem während einer positiven Periode auftretenden Erdschluß (Figur 5) bzw. bei einem während einer negativen Periode auftretenden Erdschluß, jeweils zusammen mit einem Ausgangs- oder Fehlersignal u.a. zum Betätigen von Trennschaltern zum Abschalten sämtlicher Phasen;

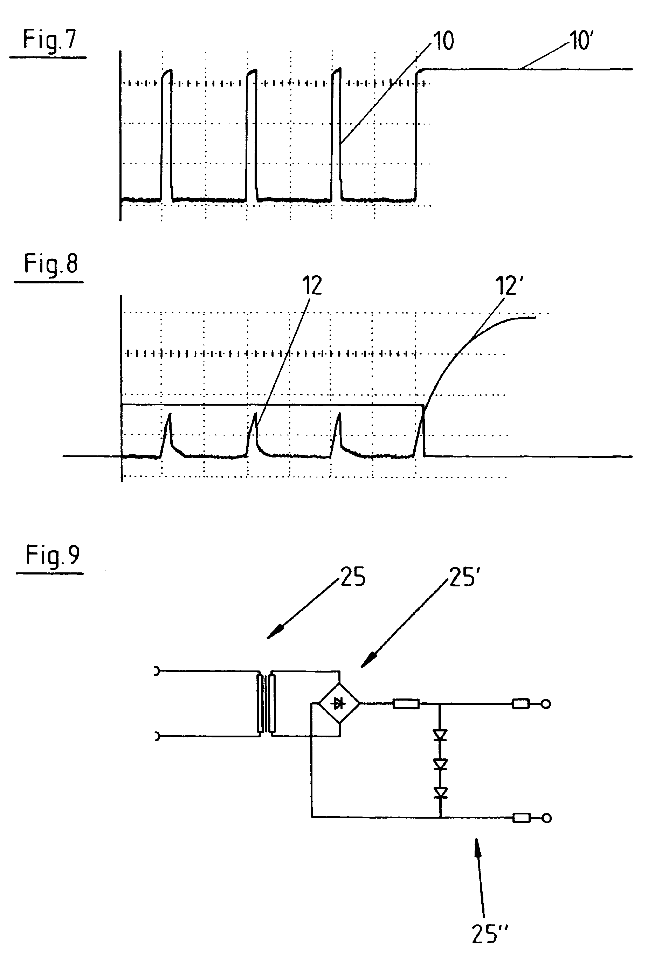

- Fig. 7: und 8 Darstellung wie Figuren 3 und 4 beim Auftreten eines Phasenfehlers (Erdschluß);
- Fig. 9: die Schaltung einer möglichen Ausführungsform der Eingangs- oder Meßstufe;

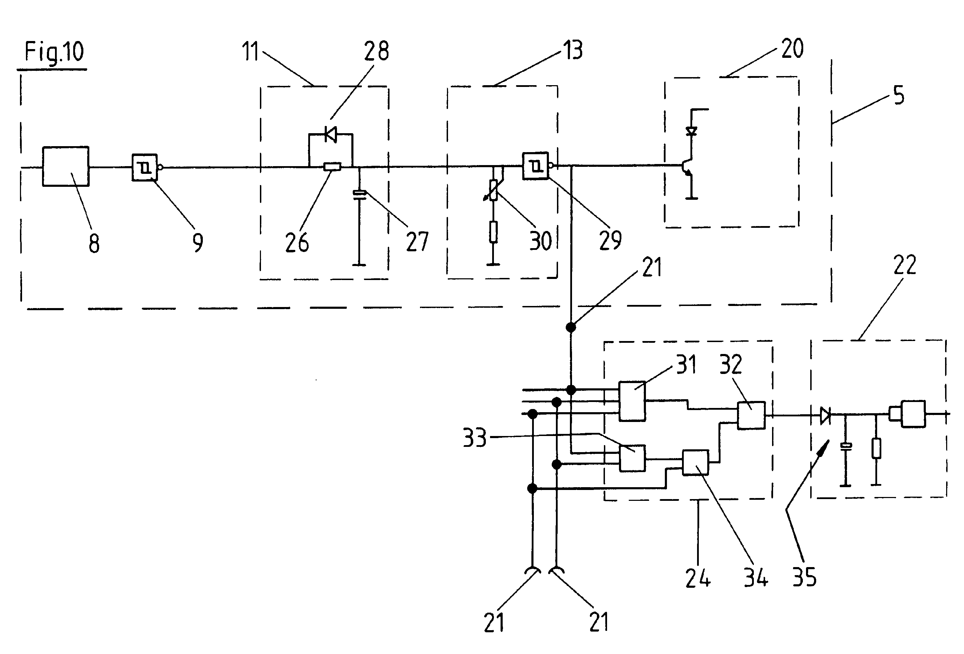

- Fig. 10: die Schaltung der auf die Eingangsstufen folgenden Stufen der Vorrichtung der Figur 1,

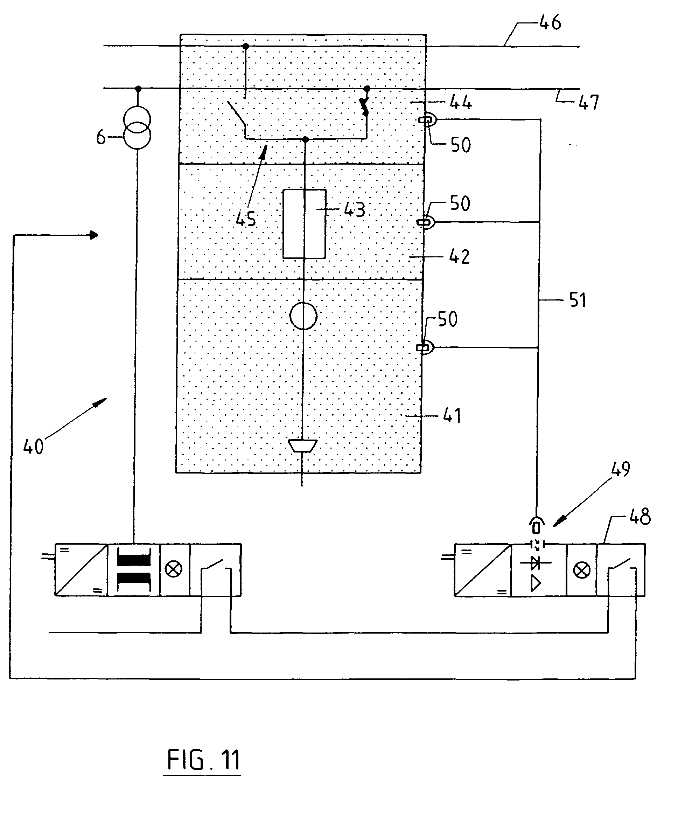

- Figur 11: in vereinfachter Darstellung eine Mittel-Spannungschaltanlage, zusammen mit einem Anlagen-Schutzsystem, welches die Vorrichtung der Figuren 1 - 10 sowie eine Lichtbogenerfassungsvorrichtung aufweist;

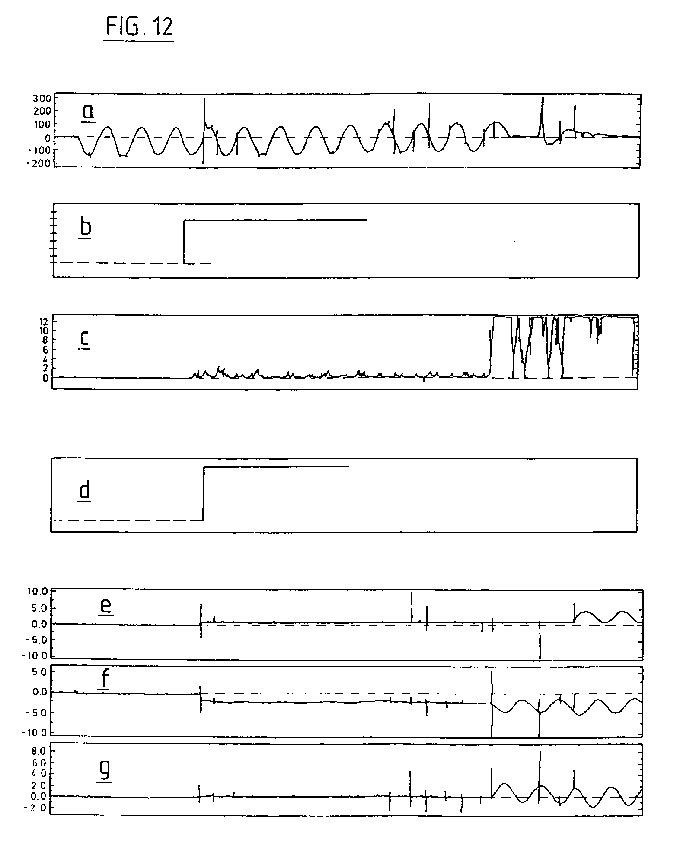

- Figur 12: in mehreren zeitgleichen Diagrammen den Erdschlußstrom beim Auftreten eines Erdschlusses, die Ausgangsspannung der Vorrichtung zur Erkennung eines Phasenfehlers, die Ausgangsspannung eines Lichtbogenindikators der Lichtbogenerfassungsvorrichtung sowie ein Abschaltsignal zum Betätigen der Leistungsschalter der betreffenden Zelle.

In den Figuren sind 1 - 3 die drei Leiter oder Phasen einer Leitung zur Übertragung von elektrischer Energie, beispielsweise einer Mittelspannungsschaltanlage. Mit 4 ist allgemein die Vorrichtung zur Phasenfehler-Erkennung bzw. zur Erdschluß-Erfassung bezeichnet, wobei diese Vorrichtung 4 tatsächlich nicht nur zur reinen Erkennung bzw. Erfassung eines möglichen Phasenfehlers oder Erdschlusses dient, sondern zugleich auch ein Signal (Fehlersignal 19) liefert, mit welchem durch Ansteuerung entsprechender Leistungsschalter der mit dem Fehler bzw. mit dem Erdschluß behaftete Leitungsstrang (Leiter 1 - 3) von dem übrigen Netz abgetrennt wird.

Generell umfaßt die Vorrichtung 4 für die Überwachung jeder Phase 1 - 3 jeweils ein eigenes Modul 5, welches beispielsweise auf einer Karte oder einem Einschub zusammen mit den Modulen für die weiteren Phasen oder Leiter 1 - 3 in einem gemeinsamen Gehäuse untergebracht ist. Dieses Gehäuse kann dann auch weitere Module 5 für weitere Leitungen oder Leitungsabschnitte aufnehmen.

In der Figur 1 ist der einfacheren Darstellung wegen lediglich ein Modul 5 für die Überwachung des Leiters 3 wiedergegeben.

Jedem Modul 5 ist eine eigene Eingang- bzw. Meßstufe 6 zugeordnet, die mit ihrem Eingang die Spannung an dem jeweiligen Leiter erfaßt und an ihrem Ausgang als Meßsignal 7 eine gegenüber der Spannung der Phase 3 reduziertes Wechselspannungssignal liefert, dessen zeitlicher Verlauf dem zeitlichen Verlauf der Spannung an der Phase 3 proportional ist. Bei der in den Figuren wiedergegebenen Ausführungsform ist die Eingangsstufe 6 so ausgeführt, daß sie an ihrem Ausgang ein durch Doppelweg-Gleichrichtung erzeugte Meßsignal 7 liefert.

Der Ausgang der jeweiligen Meßstufe 6 ist mit den zugehörigen Eingang des Moduls 5 verbunden, wobei dieser Eingang bei der dargestellten Ausführungsform von einer Trennstufe 8 gebildet ist, die eine vollständige galvanische Trennung bewirkt und im wesentlichen aus einem Opto-Koppler besteht.

Das Ausgangssignal der Trennstufe 8 wird dem Eingang einer invertierenden TriggerStufe 9 zugeführt, deren Ausgangsspannung durch die vordere Flanke jedes von einer Sinus-Halbwelle gebildeten Impulses des Meßsignales 7 von einem positiven Spannungswert auf Null geschaltet wird und dann nach einer vorgegebenen Zeitdauer und noch vor dem Eintreffen der Flanke des nächsten Impulses des Meßsignales 7 durch ein Zeitglied gesteuert wiederum den positiven Spannungswert annimmt, so daß die in der Figur 3 dargestellte Impuls-Spannung 10 am Ausgang der Triggerstufe 9 erhalten wird.

Der Ausgang der Triggerstufe 9 ist mit dem Eingang einer Integrierstufe 11 verbunden, in der jeder Impuls des Impulssignales 10 integriert und dadurch ein Impulssignal 12 erzeugt wird, bei dem die Amplitude der Impulse eine Funktion der Breite bzw. der Impulsdauer der Impulse des Signals 10 ist. Bei störungsfreiem Betrieb entspricht jedem Impuls des Signals 10 ein durch seine Integration gewonnener Impuls des Impulssignals 12.

Das Ausgangssignal der Stufe 11 wird einer Schaltstufe 13 zugeführt, in der dieses Ausgangssignal mit einer Schaltschwelle 14 verglichen wird. Letztere ist einstellbar, und zwar derart, daß die Amplituden der Impulse des Signals 12 im normalen, störungsfreien Betrieb deutlich unter der Schaltschwelle 14 liegen.

Die Figuren 5 und 6 zeigen den zeitlichen Verlauf der Eingangsspannung am Eingang der Eingangs- bzw. Meßstufe 6, und zwar in der Figur 5 einen zeitlichen Verlauf 15 beim Auftreten eines Erdschlusses in der positiven Phase der Wechselspannung am Leiter 3. Dieser Erdschluß ist durch den plötzlichen Spannungsabfall entsprechend der Linie 16 charakterisiert.

Die Figur 6 zeigt den Spannungsverlauf 17 bei einem während der negativen Phase am Leiter 3 auftretenden Erdschluß, der durch den plötzlichen Spannungsabfall entsprechend der Linie 18 charakterisiert ist. Beide Fehler führen dazu, daß in dem Ausgangs- oder Meßsignal 7 auf eine bestimmte, die Triggerstufe 9 noch triggernde Flanke, beispielsweise Vorderflanke der Impulse des Meßsignals 7 nach dem Eintreten des Erdschlusses die nächste, die Triggerstufe 9 triggernde Flanke ausbleibt und dementsprechend die Ausgangsspannung 10 an dieser Triggerstufe durch die fehlende Flanke nicht mehr auf Null gesetzt werden kann, wie dies in der Figur 7 bei 10' dargestellt ist. Dies hat zur Folge, daß nach dem Eintreten des Erdschlusses die Impulse des Ausgangssignals 12 ausbleiben und die Amplitude dieses Ausgangssignals 12 über die Schaltschwelle 14 ansteigt, wie dies in der Figur 8 mit dem Verlauf 12' angedeutet ist. Dies hat auch zur Folge, daß die Schaltstufe 13 dann ein Fehlersignal 19 liefert, welches in den Figuren1, 5 und 6 durch die von Null auf einen positiven Spannungswert ansteigende Spannung dargestellt ist. Dieses Fehlersignal 19 dient dann u.a. zur Ansteuerung einer optischen Anzeige 20, die den Phasenfehler an dem Leiter 3 anzeigt. Weiterhin dient das am Ausgang 21 des Moduls 5 anstehende Fehlersignal 19 über eine Treiber- oder Verstärkerstufe 22 auch zum Ansteuern von Relais 23. Über diese werden dann bei Vorliegen des Signals 19 Motoren von Trennschaltern betätigt, die alle drei Leiter 1 - 3 des Leitungsabschnittes, an dem der Erdfluß aufgetreten ist, vom Netz trennen, und zwar bevor dieser Erdschluß zu einem größeren Schaden führen kann, beispielsweise durch Erdschlüsse auch der übrigen Phasen bzw. Leiter usw.

Zwischen dem Ausgang 21 und der Treiberstufe 22 ist eine Logik 24 vorgesehen. Letztere ist ebenso wie die Treiberstufe 22 und die Relais 23 gemeinsam für die Module 5 sämtlicher Leiter 1 - 3 der Leitung vorgesehen. Die Logik 24 besitzt hierfür drei Eingänge, an die jeweils ein Ausgang 21 eines Moduls 5 angeschlossen ist. Die Logik 24 ist so ausgeführt, daß sie dann ein die Relais 23 steuerndes Ausgangssignal liefert, wenn wenigstens an einem Leiter 1 - 3 ein Erdfluß auftritt, d.h. an wenigstens einem Ausgang 21 eines Moduls das Fehlersignal 19 auftritt, allerdings kein die Relais 23 steuerndes Signal dann liefert, wenn sämtliche Leiter 1 - 3 spannungslos sind, weil der entsprechende Leitungsabschnitt beispielsweise vom Netz genommen ist.

Aus der vorstehenden Beschreibung ergibt sich, daß die Triggerstufe 9 in Verbindung mit der Integrationsstufe 11 als Schaltkreis wirken, der die Dauer zwischen zwei zeitlich aufeinander folgenden Flanken im Ausgangssignal 7 der Meßstufe 6 überwacht und das Fehlersignal 19 dann liefert, wenn diese Zeitdauer einen vorgegebenen Schwellwert übersteigt, wobei dieser Schwellwert einstellbar bzw. vorwählbar ist, und zwar bei der dargestellten Ausführungsform über die Schwellwertspannung 14. Die vorbeschriebene Schaltung zeichnet sich zwar durch einen besonders einfachen Aufbau mit hoher Betriebssicherheit aus, insbesondere auch in einer Umgebung, die mit hohen magnetischen und elektrischen Feldern belastet ist, es besteht aber auch die Möglichkeit, die Zeitdauer, in der überwachte Flanken oder Spannungspegel im Meßsignal 7 aufeinander folgen, auf andere Weise zu überwachen, und zwar beispielsweise durch Zähleinrichtungen, wobei ein Fehlersignal 19 dann erzeugt wird, wenn der von einer Zähleinrichtung ermittelte zeitliche Abstand zwischen zwei überwachten Flanken des Meßsignals 7 einen vorgegebenen Schwellwert übersteigt.

Die Figur 9 zeigt eine mögliche Ausführung für die Eingangs- bzw. Meßstufe 6. Über die Primärseite eines Übertragers 25 ist diese Stufe an den jeweiligen Leiter, beispielsweise an den Leiter 3 und an ein Bezugspotential, beispielsweise an einen Null-Leiter angeschlossen. Im Sekundärkreis des Übertragers 25 befindet sich ein Brückengleichrichter 25', dessen Ausgangsspannung über einen Spannungsteiler 25", mit die Spannung begrenzenden Dioden als Ausgangsspannung 7 zur Verfügung steht.

Die Figur 10 zeigt als Beispiel die Schaltung für die Trennstufe 8, die Triggerstufe 9, die Integrationsstufe 11 und die Vergleichsstufe 13 eines Moduls 5. Dargestellt sind weiterhin die für sämtliche Module 5 gemeinsame Logik 24 und gemeinsame Treiberstufe 22 zur Ansteuerung der in der Figur 10 allerdings nicht dargestellten Relais 23.

Wie in der Figur 10 dargestellt ist, besteht die Integrier-Stufe 11 im wesentlichen aus einem RC-Glied, welches von dem Widerstand 26 und dem Kondensator 27 gebildet ist. Zur schnelleren Entladung des Kondensators 27 in der Null-Phase des Ausgangssignals 10 dient die Diode 28 parallel zum Widerstand 26.

Die Schaltstufe 13 ist von einem Trigger 29 gebildet. Die am Eingang anliegende Spannung ist über ein Potentiometer 30 einstellbar. Mit dem Potentiometer wird damit die Schaltschwelle 14 eingestellt, bei der das Ausgangssignal 12 das Fehlersignal 19 bewirkt.

Die Logikstufe 24 besteht beispielsweise aus der in der Figur 10 wiedergegebenen Schaltung aus der logischen UND-Schaltung 31 mit negiertem Ausgang, der UND-Schaltung 32 und den beiden ODER-Schaltungen 33 und 34, wobei der Ausgang der UND-Schaltung 32 den Ausgang der Logikstufe 24 bildet. An die drei Eingänge der UND-Schaltung 31 ist jeweils ein Ausgang 21 eines Moduls 5 angeschlossen und die drei Ausgänge 21 sind über die ODER-Schaltungen 33 und 34 so miteinander verknüpft sind, daß am Ausgang der ODER-Schaltung 34 der logische Wert "1" ansteht, wenigstens an einem Ausgang 21 das Fehlersignal 19 ansteht, während die UND-Schaltung 31 am Ausgang den logischen Wert "0" aufweist, wenn an allen drei Ausgängen 21 zeitgleich das Fehlersignal 19 ansteht. Am Ausgang der UND-Schaltung 32 steht somit ein die Relais 23 über die Treiberstufe 22 ansteuerndes Signal nur dann an, wenn zwar an einer oder an mehreren Leitern 1 - 3 ein Erdschluß auftritt, nicht aber bereits schon vorher die Spannung an Leitern 1 - 3 fehlte, da der entsprechende Leitungsabschnitt vom Netz abgetrennt war.

Um auch bei einem Netzausfall eine einwandfreie Arbeitsweise des Gerätes 4 sicherzustellen, wird dieses batteriegepuffert betrieben. Durch entsprechende Einstellung der Schaltschwelle 14 wird erreicht, daß nur ernsthafte Phasen-Fehler und nicht schon durch Schwankungen der Last bedingte Spannungsschwankungen oder - Einbrüche zur Auslösung des Fehlersignals 19 führen.

Wie die Figur 10 weiterhin zeigt, ist die Treiberstufe 22 mit einem Dämpfungs- oder Verzögerungsglied ausgestattet und zwar bestehend aus einem Kondensator zur Vermeidung eines "Flatterns" der Relais 23 bei kurzzeitigem Einbruch der Spannungen an den Leitern 1 - 3.

** Die Figur 11 zeigt eine gasisolierte Mittelspannungsschaltanlage 40 bzw. eine Zelle einer solchen Schaltanlage, und zwar der einfacheren Darstellung wegen als einpolige Zelle. Die Schaltanlage 40 besteht in bekannter Weise aus drei Kammern oder Abschnitten, nämlich zunächst aus dem Abschnitt 41, der den Kabelabgang bildett und an welchem die beispielsweise zu einer Freileitung führenden Erd-Kabel angeschlossen sind. In einem zweiten Abschnitt 42 befindet sich der Leistungsschalter 43 für die dargestellte Phase. In einem dritten Abschnitt 44 ist ein Umschalter 45 vorgesehen, mit der wahlweise in Anschalten an eine der beiden Sammelschienen 46 oder 47 dieser Phase möglich ist.

In der Figur 11 ist nochmals das Gerät 4 zur Phasenfehlererkennung wiedergegeben, welches über die Eingangs- und Meßstufe 6 an die Sammelschiene 47 angeschlossen ist, die dem Leiter 3 der Figur 1 entspricht. Der von einem Relais 23 gebildete Ausgang des Gerätes 4 ist mit dem ebenfalls von einem Relais 48 gebildeten Ausgang eines Lichtbogenerfassungsgerätes 49 in Form einer logischen UND-Funktion derart verquickt, daß dann, wenn am Ausgang des Gerätes 4 ein einen Phasenfehler anzeigendes Ausgangssignal 19 anliegt, d.h. das Relais 23 aktiviert ist und zugleich am Ausgang des Lichtbogenerfassungsgerätes 49 ein einen Lichtbogen registrierendes Signal anliegt, d.h. das Relais 48 aktiviert ist, der Leistungsschalter 43 geöffnet wird.

Das Gerät 49 weist u.a. drei Lichtdetektoren 50 auf, von denen jeweils einer in jedem Abschnitt 41, 42 und 44 vorgesehen ist. Von den Lichtdetektoren 50 führen Lichtleiter 51 an einen optischen Eingang des Geräte 49. Die über die Lichtleiter 41 übertragende Lichtimpulse werden im Geräte 49 in elektrische Signale umgesetzt und ausgewertet, so daß ein Ausgangssignal des Gerätes 49 immer dann ansteht, wenn zumindest in einem Abschnitt 41, 42, 44 ein Lichtbogen auftritt.

Mit dem von den beiden Geräten 4 und 49 gebildeten System ist ein zuverlässiger Schutz der Mittelspannungsschaltanlage 40 gegenüber in dieser Anlage auftretenden internern Erdschlüssen und daraus resultierenden Kurzschlüssen zwischen den Phasen. möglich.

Die Figur 12 zeigt in dem Diagramm a) den Strom eines einphasigen Erdschlusses, der zum Zeitpunkt T 0 aufgetreten ist. In den Diagrammen b) und c) ist gezeigt, daß bereits nach kurzer Zeitdauer nach dem Auftreten des Phasenfehlers (einphasiger) Erdschluß das Fehlersignal 19 und auch ein Ausgangssignal des Gerätes 49 anliegen, so daß entsprechend dem Diagramm d) innerhalb einer Zeitdauer wesentlich kleiner als 100 Millisekunden nach dem Auftreten des Erdschlusses der Leistungsschalter 43 zumindest in dieser Phase geöffnet und der Erdschluß damit gelöscht wird.

Die Diagramme e), f) und g) zeigen den Strom der drei Phasen für den angenommenen Fall, daß das von den Geräten 4 und 49 gebildete Schutzsystem nicht vorhanden ist und ein frühzeitiges Abschalten der fehlerbehafteten Phase daher nicht erfolgt. Nach etwa 250 Millisekunden bildet sich durch den um den gestörten Leiter rotierenden Erdschluß ein Kurzschluß zwischen zwei Phasen, der in den Diagrammen f) und g) durch den Wechselstrom gekennzeichnet ist. Kurze Zeit später schließt dieser Kurzschluß die dritte Phase mit ein. Es kommt hierbei dann zu hohen Strömen, die eine erhebliche Energie freisetzen und zu einer kompletten Zerstörung der Schaltanlage führen können.

Mit dem beschriebenen System werden also interne, d.h. in der Schaltanlage auftretende Erdschlüsse erfaßt und ein automatisches Abschalten zumindest der gestörten Phase erreicht, bevor es zu einem zwei- oder dreipoligen Kurzschluß kommt.

Das System wurde vorstehend für Mittelspannungsschaltanlagen beschrieben. Das System kann aber auch für Hochspannungsschaltanlagen verwendet werden. Weiterhin ist das System auch in einphasigen, gekapselten gasisolierten Schaltanlagen in vorteilhafterweise verwendbar.

Die Vorteile des vorbeschriebenen Systems lassen sich u.a. wie folgt zusammenfassen:
- Bei dreipoligen gasisolierten Schaltanlagen in gelöschten Netzen
   Das System hat hier, wie vorstehend ausgeführt wurde, einen großen Vorteil, das in einer Zeit kleiner als 100 Millisekunden abgeschaltet werden kann, d.h. der einphasige Fehler (ob Erdschluß oder Kurzschluß) kann abgeschaltet werden bevor er zu einem zwei- oder dreiphasigen Fehler wird.
- Bei einpoliger gasisolierter Schaltanlage in gelöschten Netzen
   Der Störlichtbogen ist auf einen Erdschlußlichtbogen begrenzt. Dieser Erdschlußlichtbogen wird mit dem System örtlich genau erfaßt. In Verbindung mit dem Gerät 4 kann der Erdschlußlichtbogen dann gezielt frei- oder abgeschaltet werden.
- Bei dreipoligen luftisolierten Schaltanlagen
   Grade bei solchen Anlagen ist es notwendig, Fehler sehr rasch abzuschalten, da der einpolige Erdschluß innerhalb von 150 - 200 ms zu einem zwei- oder dreipoligen Kurzschluß führt. Durch das schnelle Abschalten wird die Gefahr für das Bedienungspersonal, sowie die Zerstörung der Schaltanlage erheblich reduziert.

Die Erfindung wurde voranstehend an Ausführungsbeispielen beschrieben.

### Bezugszeichenliste

- 1, 2, 3: Leiter
- 4: Gerät
- 5: Modul
- 6: Meßstufe
- 7: Ausgangssignal der Meßstufe
- 8: Trennstufe
- 9: Triggerstufe
- 10: Ausgangssignal der Triggerstufe
- 11: Integrationsstufe
- 12: integriertes Ausgangssignal
- 13: Vergleichsstufe
- 14: Schaltschwelle
- 15: Eingangssignal an der Meßstufe
- 16: Spannungsabfall durch Erdschluß
- 17: Eingangssignal an der Eingangsstufe
- 18: Spannungsabfall durch Erdschluß
- 19: Fehlersignal
- 20: Anzeige
- 21: Ausgang
- 22: Treiberstufe
- 23: Relais
- 24: Logikstufe
- 25: Übertrager
- 25': Gleichrichter
- 25": Spannungsteiler
- 26: Widerstand
- 27: Kondensator
- 28: Diode
- 29: Trigger
- 30: Potentiometer
- 31, 32: logische UND-Schaltung
- 33, 34: logische ODER-Schaltung
- 35: Zeitverzögerungsglied
- 40: Schalteranordnung
- 41: Abschnitt bzw. Kammer
- 42: Abschnitt bzw. Kammer
- 43: Leistungsschalter
- 44: Kammer
- 45: Umschalter
- 46, 47: Sammelschiene
- 48: Relais
- 49: Lichtbogenerfassungsgerät
- 50: Lichtdetektor
- 51: Lichtleiter

## Patentansprüche

1. Vorrichtung zur Phasenfehler-Erkennung an wenigstens einem Leiter oder wenigstens einer Phase einer Einrichtung oder Leitung für die Übertragung elektrischer Energie, durch Überwachung der Wechselspannung an dieser Phase oder an diesem Leiter, die Erkennungs- und Auswert-Mittel (9, 11, 13) aufweist, mit denen wenigstens ein Abschnitt, der bei störungsfreiem Betrieb im zeitlichen Verlauf der Wechselspannung oder eines dieser Wechselspannung entsprechenden Messsignals (7) periodisch wiederkehrt, erfasst und ein einen Phasenfehler anzeigendes Fehlersignal (19) dann erzeugt wird, wenn im Messsignal nach dem letzten Eintreffen eines überwachten Abschnitts innerhalb eines vorgegebenen . Überwachungs-Zeitintervalls kein weiterer Abschnitt auftritt wobei bei der Vorrichtung die Erkennungs- und Auswert-Mittel (9, 11, 13) zur Erzeugung eines der Zeitdauer der überwachten Periode der Wechselspannung entsprechenden ersten Ausgangssignals (12) sowie zur Erzeugung des Fehlersignals (19),
ausgebildet sind wobei das Fehlersignal erzeugt wird wenn für das erste Ausgangssignal (12) eine Schaltschwelle (14) überschritten wird **dadurch gekennzeichnet, dass** die Schaltschwelle einstellbar ist und das vorgegebenen Überwachungs-Zeitintervall in etwa gleich der halben Periodendauer der Wechselspannung an dem wenigstens einem Leiter (1 - 3) ist.

2. Vorrichtung nach Anspruch 1, **dadurch gekennzeichnet, dass** von den Erkennungs- und Auswert-Mitteln jeweils eine vorgegebene Flanke der positiven und/oder negativen Halbwelle der Wechselspannung, beispielsweise die zeitlich vorauseilende Flanke, erfasst wird.

3. Vorrichtung nach Anspruch 1 oder 2, **dadurch gekennzeichnet, dass** von den Erkennungs- und Auswert-Mitteln (9, 11, 13) jeweils eine vorgegebene Flanke sowohl der positiven als auch der negativen Halbwelle der Wechselspannung an dem wenigstens einen Leiter (1 - 3) erfasst wird.

4. Vorrichtung nach einem der vorhergehenden Ansprüche, **gekennzeichnet durch** Erkennungs- und Auswert-Mittel (9, 11, 13), die Teil eines der jeweiligen Phase zugeordneten Überwachungsmoduls (5) sind.

5. Vorrichtung nach einem der Ansprüche 1 bis4, **dadurch gekennzeichnet, dass** die Erkennungs- und Auswert-Mittel (9, 11) als erstes Ausgangsignal ein Impulssignal (12) liefern, bei dem die Amplitude der Impulse proportional zu der Zeitdauer ist, in der zwei überwachte Abschnitte im Messsignal aufeinander folgen.

6. Vorrichtung nach einem der vorhergehenden Ansprüche, **dadurch gekennzeichnet, dass** das erste Ausgangssignal in einer weiteren Stufe (13) mit einer einstellbaren Schaltwelle (14) verglichen wird.

7. Vorrichtung nach einem der vorhergehenden Ansprüche, **dadurch gekennzeichnet, dass** die Erkennungs- und Auswert-Mittel eine Stufe, vorzugsweise eine Triggerstufe (9) aufweisen, die ein zweites Ausgangssignal (10) liefert, welche beim Eintreffen eines überwachten Abschnittes jeweils von einem ersten Zustand auf einen zweiten Zustand zurückgesetzt wird und selbsttätig noch vor dem Eintreffen eines folgenden Abschnittes wieder den ersten Zustand annimmt, wobei bei einem Ausbleiben des überwachten Abschnittes ein Rücksetzen der zweiten Ausgangsspannung (10) von dem ersten Zustand in den zweiten Zustand nicht erfolgt, und dass Mittel vorgesehen sind, die die Dauer des ersten Zustandes erfassen und das Fehlersignal (19) dann erzeugen, wenn diese Dauer eine vorgegebene oder einstellbare Schwelle übersteigt,
wobei beispielsweise der erste und zweite Zustand unterschiedliche Spannungswerte sind, und/oder
wobei beispielsweise die zweite Ausgangsspannung (10) einer Integrierstufe (11) zugeführt wird, die an ihrem Ausgang eine impulsförmige erste Ausgangsspannung (12) liefet, bei der die Amplituden der Impulse der Dauer des ersten Zustandes der zweiten Ausgangsspannung (10) proportional sind.

8. Vorrichtung nach einem der Ansprüche 1 bis 8, **gekennzeichnet durch** eine weitere Stufe (13), die das Fehlersignal (19) dann liefert, wenn die Amplituden der Impulse des ersten Ausgangssignals (12) die einstellbare Schaltschwelle (14) übersteigen.

9. Vorrichtung nach einem der vorhergehenden Ansprüche, **gekennzeichnet durch** eine Eingangs- oder Messstufe (6), an deren Eingang die Wechsel-Spannung des wenigstens einen Leiters (1, 3) oder eine hierzu proportionale Spannung anliegt und die an ihrem Ausgang das Messsignal liefert,
wobei beispielsweise die Eingangsstufe (6) ein impulsförmiges Messsignal liefert, und zwar mit einer Impulsfolgefrequenz, die der doppelten Frequenz der Wechselspannung an dem wenigstens einen Leiter (1 - 3) entspricht, wobei die Messstufe (6) hierfür beispielsweise einen Doppelweg-Gleichrichter zur Erzeugung der Messspannung aufweist.

10. Vorrichtung nach Anspruch 9, **dadurch gekennzeichnet, dass** die Messstufe (6) Mittel zur Spannungsreduzierung (25') und zur Spannungsbegrenzung (25") aufweist.

11. Vorrichtung nach einem der vorhergehenden Ansprüche, **gekennzeichnet durch** eine von dem Fehlersignal (19) angesteuerte optische und/oder akustisch Anzeige.

12. Vorrichtung nach einem der vorhergehenden Ansprüche, **dadurch gekennzeichnet, dass** durch das Fehlersignal (19) zumindest ein Stellglied wenigstens eines Trennschalters zur Abschaltung des wenigstens einen überwachten Leiters (1 - 3) betätigbar ist.

13. Vorrichtung nach einem der vorhergehenden Ansprüche, **dadurch gekennzeichnet, dass** für die gleichzeitige Überwachung mehrerer Leiter bzw. Phasen für jede Phase bzw. für jeden Leiter ein Überwachungsmodul (5) vorgesehen ist, und dass die das Fehlersignal (19) liefernden Ausgänge (21) dieser Module über eine Logik (24) Betätigungselemente für Trennschalter sämtlicher Leiter ansteuern, und zwar in der Form, dass beim Auftreten eines Phasenfehlers bereits an einem Leiter (1 - 3) die Trennschalter sämtlicher Leiter für ein Abschalten dieser Leiter vom Netz betätigt werden.

14. Vorrichtung nach Anspruch 13, **dadurch gekennzeichnet, dass** der Ausgang (21) des wenigstens einen Überwachungsmoduls (5) wenigstens ein Schaltelement, beispielsweise Relais zum Betätigen eines Trennschalters ansteuert.

15. Schaltanlagenschutzsystem **gekennzeichnet durch** eine Vorrichtung nach einem der vorhergehenden Ansprüche sowie **durch** ein Lichtbogenerfassungsgerät (49), welches wenigstens einen eine Schaltanlage (40) überwachenden Lichtsensor (50) aufweist und beim Auftreten eines Lichtbogens in der Schaltanlage (40) ein diesen Lichtbogen registrierendes Ausgangssignal liefert, sowie **durch** Mittel, die ein das Wegschalten der Schaltanlage (40) oder das Öffnen wenigstens eines Leistungsschalters (43) bewirkendes Signal dann erzeugen, wenn sowohl das den Phasenfehler anzeigende Fehlersignal (19) als auch das einen Lichtbogen registrierende Ausgangssignal von den dem selben, von den Geräten überwachten Teil der Schaltanlage vorliegen.

## Claims

1. Device for the phase error detection on at least one conductor or at least one phase of a device or lead for the transmission of electrical energy, by monitoring the alternating current voltage at this phase or at this conductor, which has detection and evaluation means (9, 11, 13) with which at least one section which during fault-free operation periodically recurs in the chronological sequence of the alternating current voltage or a measuring signal (7) corresponding to this alternating current voltage, is picked up and an error signal (19) indicating a phase error is then produced when no further section appears in the measuring signal within a predetermined monitoring time interval after the last appearance of a monitored section wherein in the device the detection and evaluation means (9, 11, 13) are designed for generating a first output signal (12) corresponding to the length of time of the monitored period of the alternative current voltage as well as for generating the error signal (19) wherein the error signal is generated when a signal threshold (14) for the first output signal (12) is exceeded **characterised in that** the signal threshold is adjustable and the predetermined monitoring time interval is roughly equal to half the period length of the alternating current voltage on the at least one conductor (1-3).

2. Device according to claim 1 **characterised in that** a predetermined flank of the positive and/or negative half-wave of the alternating current voltage, by way of example the chronologically leading flank, is picked up each time by the detection and evaluation means.

3. Device according to claim 1 or 2 **characterised in that** a predetermined flank both of the positive and also of the negative half-wave of the alternating current voltage on the at least one conductor (1-3) are picked up each time by the detection and evaluation means (9, 11, 13).

4. Device according to one of the preceding claims **characterised by** detection and evaluation means (9, 11, 13) which are part of a monitoring module (5) assigned to the relevant phase.

5. Device according to one of claims 1 to 4 **characterised in that** the detection and evaluation means (9, 11) supply as a first output signal a pulse signal (12) in which the amplitude of the pulse is proportional to the period of time in which two monitored sections follow one another in the measuring signal.

6. Device according to one of the preceding claims **characterised in that** the first output signal is compared in a further stage (13) with an adjustable signal threshold (14).

7. Device according to one of the preceding claims **characterised in that** the detection and evaluation means have a stage, preferably a trigger stage (9) which supplies a second output signal (10) which with the arrival of a monitored section is set back each time from a first state to a second state and still before the arrival of a following section automatically adopts the first state again wherein with the non-appearance of the monitored section a resetting of the second output voltage (10) from the first state to the second state does not take place, and that means are provided which detect the duration of the first state and then generate an error signal (19) when this duration exceeds a predetermined or adjustable threshold,
wherein by way of example the first and second state are different voltage values, and/or
wherein by way of example the second output voltage (10) is supplied to an integrating stage (11) which supplies at its output a pulse-type first output voltage (12) in which the amplitudes of the pulses are proportional to the duration of the first state of the second output voltage (10).

8. Device according to one of claims 1 to 8 **characterised by** a further stage (13) which then supplies the error signal (19) when the amplitudes of the pulse of the first output signal (12) exceed the adjustable signal threshold (14).

9. Device according to one of the preceding claims **characterised by** an input or measuring stage (6) whose input is touched by the alternating current voltage of the at least one conductor (1, 3) or a voltage proportional thereto and which supplies the measuring signal at its output,
wherein by way of example the input stage (6) supplies a pulse-type measuring signal, namely with a pulse sequence frequency which corresponds to double the frequency of the alternating current voltage at the at least one conductor (1-3), wherein the measuring stage (6) has for this by way of example a two-way rectifier for generating the measuring voltage.

10. Device according to claim 9 **characterised in that** the measuring stage (6) has means for voltage reduction (25') and for voltage restriction (25").

11. Device according to one of the preceding claims **characterised by** an optical and/or acoustic indicator controlled by the error signal (19).

12. Device according to one of the preceding claims **characterised in that** at least one control member of at least one circuit breaker can be actuated by the error signal (19) for switching off the at least one monitored conductor (1-3).

13. Device according to one of the preceding claims **characterised in that** for the simultaneous monitoring of several conductors and phases respectively one monitoring module (5) is provided for each phase or for each conductor respectively, and that the outputs (21) of these modules supplying the error signal (19) control by a logic (24) the actuating elements for the circuit breakers of all conductors, namely in the way where with the occurrence of a phase error already on one conductor (1-3) the circuit breakers of all conductors are actuated for switching off these conductors from the network.

14. Device according to claim 13 **characterised in that** the output (21) of the at least one monitoring module (5) controls at least one switch element, by way of example a relay for actuating a circuit breaker.

15. Switchgear safety system **characterised by** a device according to one of the preceding claims as well as by an electric arc detection apparatus (49), which has at least one light sensor (50) monitoring a switchgear (40) and which with the appearance of an electric arc in the switchgear (40) supplies an output signal which registers this electric arc, as well as by means which generate a signal causing the switch off of the switchgear (40) or the opening of at least one power switch (43) when both the error signal (19) indicating the phase error as well as the output signal registering an electric arc exist from the same part of the switchgear monitored by the apparatuses.

## Revendications

1. Appareil de détection des défauts de phase sur au moins un conducteur ou au moins une phase d'un équipement ou d'une ligne de transmission d'énergie électrique, par surveillance de la tension alternative sur cette phase ou sur ce conducteur, qui présente des moyens de détection et d'évaluation (9, 11, 13) avec lesquels au moins une section qui, en cas de fonctionnement sans défaut, se reproduit périodiquement dans l'évolution dans le temps de la tension alternative ou d'un signal de mesure (7) correspondant à cette tension alternative, est saisie et un signal de défaut (19) indiquant un défaut de phase est ensuite généré, lorsque dans le signal de mesure après la dernière arrivée d'une section surveillée dans un intervalle de temps de surveillance prédéfini, aucune autre section n'apparaît, dans lequel sur l'appareil, les moyens de détection et d'évaluation (9, 11, 13) sont configurés pour générer un premier signal de sortie (12) correspondant à la durée de la période surveillée de la tension alternative ainsi que pour générer le signal de défaut (19), dans lequel le signal de défaut est généré, lorsque pour le premier signal de sortie (12) un seuil de commutation (14) est dépassé, **caractérisé en ce que** le seuil de commutation est réglable et l'intervalle de temps de surveillance prédéfini est à peu près égal à la demi-période de la tension alternative sur l'au moins un conducteur (1 - 3).

2. Appareil selon la revendication 1, **caractérisé en ce que** respectivement un flanc prédéfini de la demi-onde positive et/ou négative de la tension alternative, par exemple le flanc en avance dans le temps, est détecté par les moyens de détection et d'évaluation.

3. Appareil selon la revendication 1 ou 2, **caractérisé en ce que** respectivement un flanc prédéfini aussi bien de la demi-onde positive que de la demi-onde négative de la tension alternative est détecté sur l'au moins un conducteur (1 - 3) par les moyens de détection et d'évaluation (9, 11, 13).

4. Appareil selon l'une quelconque des revendications précédentes, **caractérisé par** des moyens de détection et d'évaluation (9, 11, 13) qui font partie d'un module de surveillance (5) affecté à la phase correspondante.

5. Appareil selon l'une quelconque des revendications 1 à 4, **caractérisé en ce que** les moyens de détection et d'évaluation (9, 11) fournissent comme premier signal de sortie, un signal d'impulsion (12), dans lequel l'amplitude des impulsions est proportionnelle à la durée pendant laquelle deux sections surveillées se suivent dans le signal de mesure.

6. Appareil selon l'une quelconque des revendications précédentes, **caractérisé en ce que** le premier signal de sortie est comparé dans un autre étage (13) avec un seuil de commutation réglable (14).

7. Appareil selon l'une quelconque des revendications précédentes, **caractérisé en ce que** les moyens de détection et d'évaluation présentent un étage, de préférence un étage de déclenchement (9) qui fournit un deuxième signal de sortie (10) et qui lors de l'arrivée d'une section surveillée retourne respectivement d'un premier état à un deuxième état et adopte automatiquement même avant l'arrivée d'une section suivante à nouveau le premier état, dans lequel en cas d'absence de la section surveillée, un retour de la deuxième tension de sortie (10) du premier état au deuxième état n'a pas lieu et **en ce que** sont prévus des moyens qui saisissent la durée du premier état et génèrent ensuite le signal de défaut (19), lorsque cette durée dépasse un seuil prédéfini ou réglable,
dans lequel par exemple le premier et le deuxième état sont des valeurs de tension différentes, et/ou
dans lequel par exemple la deuxième tension de sortie (10) est amenée à un étage d'intégration (11), qui fournit à sa sortie une première tension de sortie (12) pulsée dans laquelle les amplitudes des impulsions sont proportionnelles à la durée du premier état de la deuxième tension de sortie (10).

8. Appareil selon l'une quelconque des revendications 1 à 8, **caractérisé par** un autre étage (13), qui fournit le signal de défaut (19) lorsque les amplitudes des impulsions du premier signal de sortie (12) dépassent le seuil de commutation réglable (14).

9. Appareil selon l'une quelconque des revendications précédentes, **caractérisé par** un étage d'entrée et de mesure (6) à l'entrée duquel s'applique la tension alternative de l'au moins un conducteur (1, 3) ou une tension proportionnelle à celle-ci et qui fournit à sa sortie le signal de mesure,
dans lequel par exemple l'étage d'entrée (6) fournit un signal de mesure pulsé et ce avec une fréquence de répétition des impulsions, qui correspond à la double fréquence de la tension alternative au niveau de l'au moins un conducteur (1 - 3), dans lequel l'étage de mesure (6) présente pour ce faire par exemple un redresseur double alternance permettant de générer la tension de mesure.

10. Appareil selon la revendication 9, **caractérisé en ce que** l'étage de mesure (6) présente des moyens de réduction de la tension (25') et de limitation de la tension (25").

11. Appareil selon l'une quelconque des revendications précédentes, **caractérisé par** un affichage optique et/ou acoustique commandé par le signal de défaut (19).

12. Appareil selon l'une quelconque des revendications précédentes, **caractérisé en ce qu'**au moins un organe de réglage d'au moins un sectionneur peut être actionné par le signal de défaut (19) pour la mise hors circuit de l'au moins conducteur surveillé (1 - 3).

13. Appareil selon l'une quelconque des revendications précédentes, **caractérisé en ce que** pour la surveillance simultanée de plusieurs conducteurs ou phases, un module de surveillance (5) est prévu pour chaque phase ou chaque conducteur, et **en ce que** les sorties (21) de ces modules fournissant le signal de défaut (19) commandent des éléments d'actionnement pour les sectionneurs de tous les conducteurs par le biais d'une logique (24), et ce, de telle sorte que lors de l'apparition d'un défaut de phase sur un conducteur (1 - 3), les sectionneurs de tous les conducteurs sont actionnés pour une déconnexion de ces conducteurs du réseau.

14. Appareil selon la revendication 13, **caractérisé en ce que** la sortie (21) de l'au moins un module de surveillance (5) commande au moins un élément de commutation, par exemple relais d'actionnement d'un sectionneur.

15. Système de protection d'installation de distribution **caractérisé par** un appareil selon l'une quelconque des revendications précédentes ainsi que par un appareil de détection d'arc électrique (49), qui présente au moins un capteur de lumière (50) surveillant une installation de distribution (40) et lors de l'apparition d'un arc électrique dans l'installation de distribution (40) fournit un signal de sortie enregistrant cet arc électrique, ainsi que par des moyens qui génèrent un signal induisant la mise hors circuit de l'installation de distribution (40) ou l'ouverture d'au moins un sectionneur de puissance (43), lorsqu'il y a aussi bien le signal de défaut (19) indiquant le défaut de phase que le signal de sortie enregistrant un arc électrique de la même partie de l'installation de distribution surveillée par les appareils.
